# EUROPÄISCHE PATENTSCHRIFT

(11) **EP 1 707 842 B1**
(45) Veröffentlichungstag und Bekanntmachung des Hinweises auf die Patenterteilung: **17.09.2008**
(21) Anmeldenummer: 06001582.3
(22) Anmeldetag: 26.01.2006
(51) Int. Cl.: F16F 13/14

(54) **Hydrobuchse mit Axialdichtung**
Hydraulically damped bush with axial sealing
Manchon à amortissement hydraulique avec étanchéité axiale

(30) Priorität: 30.03.2005 DE 102005014834
(43) Veröffentlichungstag der Anmeldung: 04.10.2006
(73) Patentinhaber: ZF FRIEDRICHSHAFEN Aktiengesellschaft, 88038 Friedrichshafen (DE)
(72) Erfinder: Börgerding, Reimund, 49439 Steinfeld (DE); Loheide, Stefan, Dr., 49134 Wallenhorst (DE); Mechelhoff, Thomas, 49413 Dinklage (DE); Siemer, Hubert, 49413 Dinklage (DE)

(56) Entgegenhaltungen:
- WO-A-02/16800
- PATENT ABSTRACTS OF JAPAN Bd. 1996, Nr. 02, 29. Februar 1996 (1996-02-29) & JP 07 269639 A (KINUGAWA RUBBER IND CO LTD), 20. Oktober 1995 (1995-10-20)

## Beschreibung

Die Erfindung betrifft eine Axialdichtung für ein Buchsenlager beziehungsweise eine Gummibuchse mit hydraulischer Dämpfung. Sie bezieht sich insbesondere auf die spezielle Ausbildung eines entsprechenden Lagers zur Realisierung einer solchen axialen Dichtung für die das viskose Dämpfungsmittel aufnehmenden Kammern des Lagers.

Elastomere Buchsenlager werden insbesondere in der Fahrzeugindustrie und dort vor allem im Bereich der Fahrwerksaufhängung vielfach und in unterschiedlichen Formen eingesetzt. Häufig sind derartige Lager nicht nur als einfache Gummibuchse mit einem Innenteil, einer Außenhülse beziehungsweise einem Außenrohr und einem dazwischen angeordneten elastomeren Lagerkörper ausgebildet, sondern weisen zur Unterstützung der Dämpfungswirkung des elastomeren Lagerkörpers einen Hydroteil auf. Dieser besteht aus wenigstens zwei in dem Lagerkörper ausgebildeten Kammern, welche mit einem viskosen Dämpfungsmittel gefüllt und durch mindestens einen Kanal strömungsleitend miteinander verbunden sind. Hinsichtlich der Gestaltung der Lager muss dabei sichergestellt werden, dass das viskose Dämpfungsmittel an den axialen Enden des Buchsenlagers nicht austreten kann. Daher werden durch eine entsprechende konstruktive Gestaltung der Lager an deren axialen Enden Dichtungen ausgebildet.

Aus der DE 196 16 638 C2 ist beispielsweise ein hydraulisch dämpfendes Lager bekannt, bei dem die Dichtfunktion durch ein auch zur Ausbildung des die Dämpfungsmittelkammern verbindenden Kanals dienendes Kanalelement realisiert wird, welches die Kammern stirnseitig, das heißt an den axialen Enden des Lagers, in der Art einer Kappe verschließt.

Die in der Praxis gegenwärtig gebräuchlichste Maßnahme besteht darin, den elastomeren Lagerkörper im Bereich seiner axialen Enden mit einem Übermaß gegenüber der das Lager aufnehmenden rohrförmigen Hülse auszubilden. Im Zuge der Montage des Lagers und des Aufschiebens des Außenrohrs erfolgt eine so genannte Kalibrierung, indem das Außenrohr mittels entsprechender mechanischer Werkzeuge, das heißt durch Zusammendrücken, zumindest im Bereich seiner axialen Enden in seinem Durchmesser reduziert wird. Hierdurch wird in den an den axialen Enden des Lagerkörpers ausgebildeten elastomeren Bereichen eine Vorspannung erzeugt, durch welche eine Dichtwirkung im Hinblick auf einen zwischen der Lagerumgebung und dem Inneren seiner Kammern bestehenden Druckunterschied erreicht, das heißt eine Dichtlippe beziehungsweise ein Dichtwulst ausgebildet wird. Ein in dieser Weise ausgebildetes Lager wird beispielsweise durch die DE 28 41 505 A1 offenbart.

Die letztgenannte Lösung hat sich zumindest im Hinblick auf die Abdichtung der Lager gegen ein Austreten des viskosen Dämpfungsmittels bewährt. Aber auch mit der Lösung gemäß der vorgenannten Druckschrift wird sicherlich eine zuverlässige Abdichtung der Lager erreicht werden. Für bestimmte Einsatzfälle ist es jedoch auch bekannt, Hydrobuchsen so auszulegen, dass in ihren, zur Aufnahme des viskosen Dämpfungsmittels im Lagerkörper ausgebildeten Kammern gegenüber dem Umgebungsdruck ein Unterdruck besteht. Dabei besteht die Gefahr, dass zwar nicht das Dämpfungsmittel aus den Kammern austritt, aber Luft in die Kammern eindringt und infolge eines Ansteigens des Kammerinnendrucks die Funktion des Bauteils beeinträchtigt wird. Diese Gefahr ergibt sich daraus, dass die Viskosität der Luft deutlich geringer ist, als die des in den Kammern befindlichen Dämpfungsmittels, so dass die mittels einer am Lager ausgebildeten Dichtlippe erzielte Dichtwirkung zwar unter Umständen ausreichend für das Dämpfungsmittel, nicht jedoch für die Abdichtung gegen das Eindringen von Luft ist. Insbesondere infolge von Temperaturschwankungen kann es dabei zum Eindringen von Luft in die Kammern kommen.

Ein ähnliches Problem stellt sich auch bei der EP 1 291 549 A1. Darin wird eine Hydrobuchse mit Axialdichtung beschrieben, welche aus einem zylindrischen Innenteil, einem das Innenteil umgebenden, elastomeren Lagerkörper und einer das Innenteil mit dem Lagerkörper aufnehmenden Außenhülse besteht, wobei in dem Lagerkörper zumindest zwei mit einem viskosen Dämpfungsmittel gefüllte, durch einen Strömungs- oder Drosselkanal miteinander verbundene Dämpfungsmittelkammern angeordnet sind. Die Dämpfungsmittelkammern sind gegen ein Austreten des Dämpfungsmittels durch axiale Dichtlippen abgedichtet, wobei im Bereich der Dichtlippen wenigstens ein, zumindest abschnittsweise auf dem Umfang des Lagerkörpers umlaufendes, von den Dämpfungsmittelkammern und dem sie verbindenden Kanal getrennt angeordnetes Volumen ausgebildet und dieses mit einer viskosen Flüssigkeit gefüllt ist.

Bei einer derartigen Hydrobuchse ist es folglich erforderlich, in den Volumina zwischen den Dichtlippen und den Dämpfungsmittelkammern die selbe Flüssigkeit zu verwenden. Ferner besteht ein weiterer Nachteil dieser bekannten Ausführung darin, dass einmal in den Dichtbereich eingedrungene Luft über die Ausnehmungen an der inneren axialen Dichtlippe auch in die Dämpfungsmittelkammern eintreten kann. Dies ist jedoch unbedingt zu vermeiden, da die Hydrobuchse damit unbrauchbar werden würde.

Aus der JP 07269639 A ist ferner eine Hydrobuchse mit einer Axialdichtung bekannt, welche aus einem Innenteil, einem das Innenteil umgebenden, mit ihm durch Vulkanisation verbundenen elastomeren Lagerkörper und einer das Innenteil mit dem Lagerkörper aufnehmenden Außenhülse besteht. Der Lagerkörper weist axiale Dichtlippen auf, wobei im Bereich der Dichtlippen zumindest abschnittsweise auf dem Umfang des Lagerkörpers umlaufende Volumina ausgebildet sind. Diese Volumina nehmen eine viskose Flüssigkeit auf, deren Druck im Wesentlichen dem Umgebungsdruck entspricht oder höher ist als dieser.

Darüber hinaus betrifft die WO 02/16800 A1 eine Hydrobuchse mit Axialdichtung, welche aus einem im Wesentlichen zylindrischen Innenteil, einem das Innenteil umgebenden, mit ihm durch Vulkanisation verbundenen elastomeren Lagerkörper und einer das Innenteil mit dem Lagerkörper aufnehmenden Außenhülse besteht. Auch bei dieser Hydrobuchse sind in dem Lagerkörper zumindest zwei mit einem viskosen Dämpfungsmittel gefüllte, durch einen Strömungs- oder Drosselkanal miteinander verbundene Dämpfungsmittelkammern angeordnet, die gegen ein Austreten des Dämpfungsmittels durch axiale Dichtlippen abgedichtet sind. Im Bereich der Dichtlippen befinden sich ein oder mehrere, zumindest abschnittsweise auf dem Umfang des Lagerkörpers umlaufende, von den Dämpfungsmittelkammern und dem sie verbindenden Kanal getrennt angeordnete Volumina. Diese Volumina sind mit einer viskosen Flüssigkeit gefüllt, wobei die im Bereich der Dichtlippen angeordneten Volumina nicht mit den Dämpfungsmittelkammern strömungsleitend verbunden und mit einer viskosen Flüssigkeit gefüllt sind, deren Druck im Wesentlichen dem Umgebungsdruck entspricht oder höher ist als dieser, jedenfalls aber höher ist, als der Druck in den Dämpfungsmittelkammern.

Aufgabe der Erfindung ist es, ein elastomeres buchsenförmiges Hydrolager so auszubilden, dass dieses eine Axialdichtung mit einer sowohl gegenüber dem Austreten von Dämpfungsmittel aus dem Lager als auch gegen das Eindringen von Luft in das Lager zuverlässigen Dichtungswirkung aufweist.

Die Aufgabe wird durch eine Hydrobuchse beziehungsweise ein elastomeres Buchsenlager mit den Merkmalen des Hauptanspruchs gelöst. Vorteilhafte Ausgestaltungen beziehungsweise Weiterbildungen des erfindungsgemäßen Lagers sind durch die Unteransprüche gegeben.

Bei dem vorgeschlagenen Hydrolager handelt es sich um ein Buchsenlager, dessen grundsätzlicher Aufbau bekannt ist. Das Lager besteht aus einem im Wesentlichen zylinderförmigen, vorzugsweise hohlzylindrischen Innenteil, einem dieses Innenteil umgebenden und mit ihm durch Vulkanisation verbundenen elastomeren Lagerkörper sowie einer die vorgenannten Komponenten, also das Innenteil mit dem Lagerkörper, aufnehmenden Außenhülse. Zur Realisierung einer hydraulischen Dämpfung sind in dem elastomeren Lagerkörper mindestens zwei mit einem viskosen Dämpfungsmittel gefüllte und durch einen Drossel- oder Strömungskanal miteinander verbundene Dämpfungsmittelkammern angeordnet. Die Dämpfungsmittelkammern sind gegen ein Austreten des Dämpfungsmittels durch axiale Dichtlippen abgedichtet. Diese Dichtlippen sind vorzugsweise durch Bereiche des elastomeren Lagerkörpers realisiert, welche einen gegenüber dem Innendurchmesser der Außenhülse vergrößerten Außendurchmesser aufweisen. Bei der Montage beziehungsweise beim Aufschieben der Außenhülse auf den Lagerkörper wird in den Bereichen mit Übermaß in dem Elastomer eine Vorspannung erzeugt. Hierdurch ist aufgrund der Viskosität des Dämpfungsmittels eine zuverlässige Dichtung gegen dessen Austreten gebildet. Wie bereits dargestellt, ist jedoch die durch die solchermaßen ausgebildeten Dichtlippen gegebene Dichtwirkung möglicherweise nicht ausreichend, um ein Eindringen von Luft zu verhindern, deren Viskosität deutlich geringer ist, als die des Dämpfungsmittels. Dabei ist die Gefahr des Eindringens von Luft insbesondere dann gegeben, wenn, wie für bestimmte Anwendungsfälle gewünscht, in den Dämpfungsmittelkammern gegenüber dem Umgebungsdruck ein Unterdruck herrscht. Hierbei kann unter Umständen die unter einem höheren Druck stehende Luft der Umgebung, trotz des Vorhandenseins der Dichtlippe, in die Dämpfungsmittelkammern eindringen und so die Funktion des Lagers beeinträchtigen beziehungsweise dieses unbrauchbar machen. Insbesondere im Hinblick auf Lager der letztgenannten Art, also Hydrolager mit einem Unterdruck in den Dämpfungsmittelkammern, wird durch die Erfindung eine deutlich verbesserte Dichtwirkung erreicht. Hierzu sind im Bereich der Dichtlippen, in dem Lagerkörper ein oder mehrere, zumindest abschnittsweise auf dem Umfang des Lagerkörpers umlaufende Volumina ausgebildet, welche mit einer viskosen Flüssigkeit gefüllt sind, deren Druck im Wesentlichen dem Umgebungsdruck entspricht oder höher als dieser, zumindest aber höher als der Druck des Dämpfungsmittels in den Dämpfungsmittelkammern ist. Die genannten Volumina sind getrennt von den Dämpfungsmittelkammern und dem sie verbindenden Kanal angeordnet, das heißt mit den Dämpfungsmittelkammern nicht strömungsleitend verbunden. Durch sie und die in ihnen vorgesehene viskose Flüssigkeit werden erfindungsgemäß zusätzliche Viskodichtungen für das Lager ausgebildet.

Die vorstehend und im Hauptanspruch gebrauchte Formulierung, wonach der Druck in den Viskodichtungen im Wesentlichen dem Umgebungsdruck entspricht oder höher ist als dieser meint, dass letzteres bevorzugt ist, aber eine Dichtwirkung möglicherweise auch dann gegeben ist, wenn der Druck der Flüssigkeit in den Viskodichtungen unterhalb des Umgebungsdrucks liegt. Es ist denkbar, dass dann in geringem Maße Umgebungsluft in die Viskodichtungen eindringt, diese Luft aber nicht zu den Dämpfungsmittelkammern durchdringt.

Erfindungsgemäß wird deshalb vorgeschlagen, dass die in den Viskodichtungen verwendete Flüssigkeit eine von der Viskosität des Dämpfungsmittels verschiedene oder beispielsweise eine vergleichbar hohe Viskosität aufweist.

Zudem gilt es auch, die Möglichkeit in Betracht zu ziehen, dass das Lager zwar mit einem gegenüber dem Umgebungsdruck geringfügig erhöhten Druck in den Volumina der Viskodichtungen gefertigt wird, dieser Druck aber unter extremen Umgebungsbedingungen, mit extremen Außendruckverhältnissen, vorübergehend dennoch geringer ist als der aktuell herrschende Umgebungsdruck. Insoweit entspricht der Druck in den Viskodichtungen eben nach Lesart der Erfindung zumindest im Wesentlichen dem Umgebungsdruck, das heißt ist diesem etwa gleich, oder gegebenenfalls (wenn auch nur kurzzeitig) niedriger als dieser.

Um jedoch eine zuverlässig Dichtwirkung durch die Viskodichtungen zu erreichen, ist das erfindungsgemäße Lager vorzugsweise so ausgebildet, dass die Flüssigkeit in den Viskodichtungen gegenüber dem Umgebungsdruck einen Überdruck aufweist. Der Druck wird im Zuge der Fertigung des Lagers, bei dessen Kalibrierung, über die diese Volumina beziehungsweise zusätzlichen Kammern begrenzenden Wände aufgebracht und vorzugsweise so eingestellt, dass er mit Sicherheit über dem höchsten denkbaren Umgebungsdruck liegt. Die mit der Kalibrierung bewirkte Druckerhöhung in den Viskodichtungen entsteht dabei aufgrund der Inkompressibilität der Flüssigkeit in den entsprechenden Volumina. An dieser Stelle sei angemerkt, dass selbst für Lager, deren Dämpfungsmittelkammern keinen Unterdruck gegenüber der Umgebung aufweisen, bei erfindungsgemäßer Ausbildung mit Viskodichtungen eine verbesserte Dichtwirkung im Hinblick auf das Verhindern eines Eindringens von Luft eine Verbesserung der Dichtwirkung gegeben ist und zwar insbesondere dann, wenn der Druck der Flüssigkeit in den Viskodichtungen oberhalb des Umgebungsdrucks liegt.

Um trotz der zusätzlichen Viskodichtungen den Fertigungsaufwand für das Lager nicht nennenswert zu erhöhen, ist dieses vorzugsweise so ausgebildet, dass es sich bei der viskosen Flüssigkeit in den Viskodichtungen um die auch zur Lagerdämpfung in den Dämpfungsmittelkammern verwendete Flüssigkeit handelt. Dieses bietet sich insoweit an, als die Montage der Lager im Allgemeinen unter Flüssigkeit, das heißt in der das spätere Dämpfungsmittel ausbildenden Flüssigkeit, erfolgt und dabei die Befüllung der Dämpfungsmittelkammern und der Volumina für die Viskodichtungen in einem Arbeitsgang erfolgen kann. Dabei ist es möglich, das Elastomer im Bereich der Dämpfungsmittelkammern mittels entsprechender Werkzeuge während der Montage radial nach außen zu drücken oder zu ziehen, so dass nach dem Aufschieben der Außenhülse und dem Fortfall der eine entsprechende Deformation des Elastomers bewirkenden Kraft ein Unterdruck in den Dämpfungsmittelkammer entsteht, gleichzeitig aber die mit der viskosen Flüssigkeit gefüllten Volumina für die Viskodichtungen, ohne eine solche vorausgehende Deformation, lediglich mit der Außenhülse zu verschließen und die Flüssigkeit danach, durch spätere Kalibrierung der entsprechenden Bereiche, also eine gezielte Verringerung ihres Durchschnitts, mit einem erhöhten Druck zu beaufschlagen.

Entsprechend einer praxisgerechten Ausbildungsform kommt als viskose Flüssigkeit sowohl zur Erzielung der Dämpfungswirkung, als auch zur Befüllung der Viskodichtungen, Ethylenglykol zum Einsatz. Für die geometrische Ausbildung der Viskodichtungen, das heißt ihrer die viskose Flüssigkeit aufnehmenden Volumina, kommen unterschiedliche Möglichkeiten in Betracht, welche nicht zuletzt auch vom jeweiligen Einsatzfall abhängen. So ist es möglich, entsprechende Viskodichtungen durch an beiden axialen Enden des Lagers vollständig umlaufende Kanalrillen auszubilden. Es ist aber auch möglich, eine solche Rille an Stellen, an denen eine Dichtwirkung nicht erforderlich ist, wie beispielsweise im Bereich des Tragstollens, zu unterbrechen. Die Viskodichtungen sind in diesem Falle segmentiert ausgebildet.

Die Erfindung soll nachfolgend anhand eines Ausführungsbeispiels nochmals näher erläutert werden. In den zugehörigen Zeichnungen zeigen:
- Fig. 1:: Eine axiale Hälfte einer Ausbildungsform des erfindungsgemäßen Lagers in einer axial geschnittenen Darstellung
- Fig. 2:: Zum Vergleich den entsprechenden Abschnitt eines nach dem Stand der Technik gestalteten Buchsenlagers

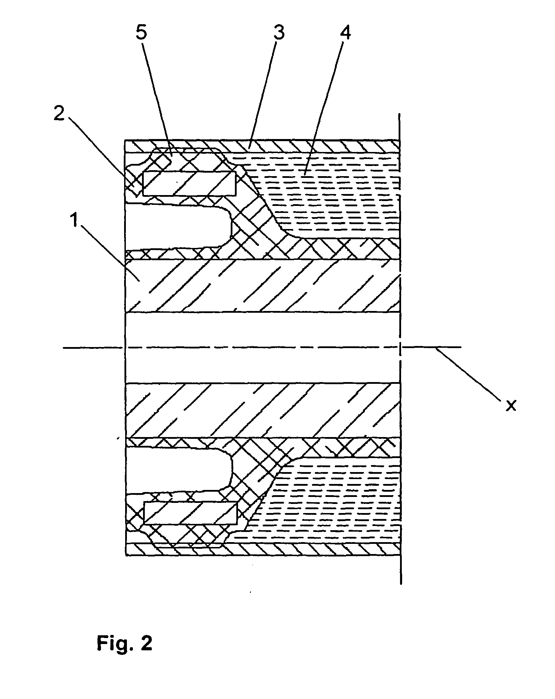

Zur Erläuterung der Erfindung soll zunächst auf die Fig. 2 Bezug genommen werden, welche eine axiale Hälfte einer Hydrobuchse nach dem Stand der Technik in einem Axialschnitt zeigt. Das Lager besteht im Wesentlichen aus einem in der Regel metallischen Innenteil 1, einem mit dem Innenteil 1 durch Vulkanisation verbundenen elastomeren Lagerkörper 2 und einer das Innenteil 1 mit dem Lagerkörper 2 aufnehmenden rohrförmigen Lagerhülse beziehungsweise Außenhülse 3. In dem Lagerkörper 2 sind zwei mit einem viskosen Dämpfungsmittel gefüllte Dämpfungsmittelkammern 4, 4' ausgebildet, welche durch einen in der Figur nicht dargestellten Überströmkanal beziehungsweise Drosselkanal miteinander verbunden sind, wobei in der Darstellung, wie betont, nur eine axiale Hälfte des zur Achse x im Wesentlichen rotationssymmetrischen Körpers gezeigt ist.

Im Bereich des axialen Lagerendes weist die den Lagerkörper 2 ausbildende Gummifeder einen Abschnitt mit einem vergrößerten Außendurchmesser auf. Der Außendurchmesser des Lagerkörpers 2 ist hier mit einem Übermaß gegenüber dem Innendurchmesser der Außenhülse 3 ausgebildet. Durch das Aufschieben des Außenrohrs 3 auf den Lagerkörper 2 und eine sich gegebenenfalls daran anschließende Kalibrierung, das heißt eine Reduzierung des Durchmessers der Außenhülse 3, wird in den hinsichtlich ihres Durchmessers vergrößerten Abschnitten des Lagerkörpers 2, insbesondere an dessen axialen Enden, eine Vorspannung erzeugt, so dass diese Bereiche als Dichtlippe 5 beziehungsweise Dichtwulst wirken. Das Lager ist hierdurch zuverlässig gegen ein Austreten der in den Dämpfungsmittelkammern 4, 4' vorhandenen viskosen Flüssigkeit abgedichtet. Wie bereits dargestellt, besitzt jedoch Luft eine erheblich geringere Viskosität als das in den Dämpfungsmittelkammern 4, 4' enthaltene Dämpfungsmittel, so dass im Falle dessen, dass die Dämpfungsmittelkammern 4, 4, wie für bestimmte Einsatzzwecke gewünscht, einen Unterdruck gegenüber der Umgebung aufweisen, die Gefahr eines Eindringens von Luft in die Dämpfungsmittelkammern 4, 4' durch diese Art der Dichtung 5 nicht beseitigt werden kann.

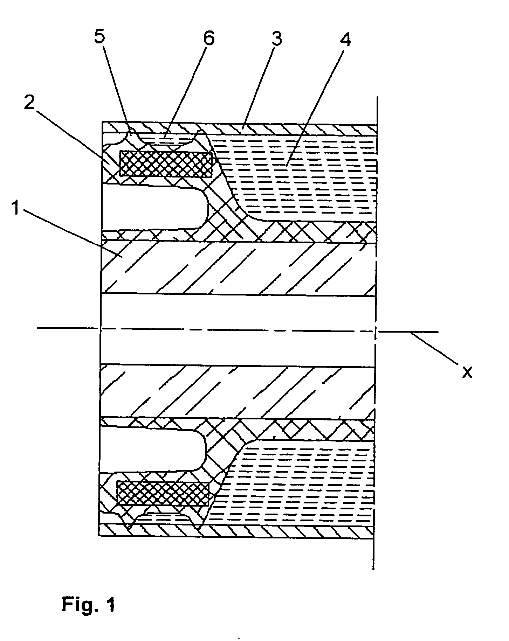

Die Lösung dieses Problems wird durch die erfindungsgemäße Gestaltung des Lagers erreicht. Eine entsprechende Ausbildungsform des erfindungsgemäßen Lagers ist durch die Fig. 1 gegeben. Diese zeigt den mit der Darstellung nach der Fig. 2 vergleichbaren Abschnitt des erfindungsgemäßen Lagers, das heißt ebenfalls nur eine axiale Hälfte des Lagers. Das Lager besitzt einen grundsätzlich gleichen Aufbau wie das Lager nach der Fig. 2, mit einem Innenteil 1, einem an das Innenteil 1 anvulkanisierten Lagerkörper 2 und einer die beiden vorgenannten Komponenten aufnehmenden rohrförmigen Außenhülse 3. Im Lagerkörper 2 sind wiederum Dämpfungsmittelkammern 4, 4' zur Aufnahme eines viskosen Dämpfungsmittels ausgebildet. Die Dämpfungsmittelkammern 4, 4' sind, wie bei den Lagern nach dem Stand der Technik, an dem dargestellten axialen Ende durch einen entsprechenden Dichtwulst 5 gegen das Austreten des Dämpfungsmittels abgedichtet. In erfindungswesentlicher Weise ist jedoch im Bereich dieser Dichtlippe 5 ein zusätzliches, ebenfalls mit dem Dämpfungsmittel gefülltes Volumen 6 ausgebildet, welches keine strömungsleitende Verbindung zu den Dämpfungsmittelkammern 4, 4' hat. Bei diesem Volumen 6 handelt es sich entweder um einen umlaufenden, nicht mit dem Drosselkanal zu verwechselnden Kanal beziehungsweise um eine Kanalrille oder um abschnittsweise auf dem Umfang der Dichtlippe 5 ausgebildete, ebenfalls mit dem Dämpfungsmittel gefüllte Kammern, wobei deren Volumen in der Regel, aber nicht zwingend, geringer ist, als das der zur Erzeugung der Dämpfungswirkung des Lagers vorgesehenen Dämpfungsmittelkammern 4, 4'. Unabhängig vom eventuellen Bestehen eines Unterdrucks in den eigentlichen Dämpfungsmittelkammern 4, 4' ist in die zusätzlichen Volumina 6 eine Menge der viskosen Flüssigkeit eingebracht, in der, aufgrund ihrer Inkompressibilität, im Zuge des Aufschiebens und des sich anschließenden Kalibrierens (Reduzieren des Durchmessers) der Außenhülse 3 über die Außenwände ein Druck, vorzugsweise ein Überdruck gegenüber dem Umgebungsdruck erzeugt wird. Da die Dichtwirkung der Dichtlippen 5 gegenüber dem viskosen Dämpfungsmittel, wie bereits mehrfach betont, in jedem Falle ausreichend ist, entweicht das Dämpfungsmittel aus den Zusatzvolumina 6 weder nach außen noch in die Dämpfungsmittelkammern 4, 4'. Gleichzeitig wird durch den in den Zusatzvolumina 6 bestehenden Druck zuverlässig verhindert, dass Luft aus der Umgebung in das Lager und dessen gegebenenfalls unter Unterdruck stehende Dämpfungsmittelkammern 4, 4' eindringt.

### Bezugszeichenliste

- 1: Innenteil
- 2: Lagerkörper
- 3: Außenhülse oder -rohr bzw. Lagerhülse
- 4, 4': Dämpfungsmittelkammer
- 5: Dichtlippe bzw. Dichtwulst
- 6: Volumen, Viskodichtung
- x: Achse

## Patentansprüche

1. Hydrobuchse mit Axialdichtung, welche aus einem im Wesentlichen zylindrischen Innenteil (1), einem das Innenteil (1) umgebenden, mit ihm durch Vulkanisation verbundenen elastomeren Lagerkörper (2) und einer das Innenteil (1) mit dem Lagerkörper (2) aufnehmenden Außenhülse (3) besteht, wobei in dem Lagerkörper (2) zumindest zwei mit einem viskosen Dämpfungsmittel gefüllte, durch einen Strömungs- oder Drosselkanal miteinander verbundene Dämpfungsmittelkammern (4, 4') angeordnet sind, welche gegen ein Austreten des Dämpfungsmittels durch axiale Dichtlippen (5) abgedichtet sind, wobei im Bereich der Dichtlippen (5) ein oder mehrere, zumindest abschnittsweise auf dem Umfang des Lagerkörpers (2) umlaufende, von den Dämpfungsmittelkammern (4, 4') und dem sie verbindenden Kanal getrennt angeordnete Volumina (6) ausgebildet und diese mit einer viskosen Flüssigkeit gefüllt sind, wobei die im Bereich der Dichtlippen (5) angeordneten Volumina (6) nicht mit den Dämpfungsmittelkammern (4, 4') strömungsleitend verbunden und mit einer viskosen Flüssigkeit gefüllt sind, deren Druck im Wesentlichen dem Umgebungsdruck entspricht oder höher ist als dieser, jedenfalls aber höher ist, als der Druck in den Dämpfungsmittelkammern (4, 4'),
**dadurch gekennzeichnet, dass** die in den Volumina (6) vorhandene Flüssigkeit eine von der Viskosität des Dämpfungsmittels verschiedene oder eine vergleichbar hohe Viskosität aufweist.

2. Hydrobuchse nach Anspruch 1,
**dadurch gekennzeichnet, dass**
die Viskodichtungen welche durch die mit der viskosen Flüssigkeit gefüllten Volumina (6) ausgebildet sind, gegenüber dem Umgebungsdruck unter Überdruck stehen.

3. Hydrobuchse nach Anspruch 1 oder 2,
**dadurch gekennzeichnet, dass**
es sich bei der viskosen Flüssigkeit in den Viskodichtungen (6) um die auch als Dämpfungsmittel verwendete Flüssigkeit handelt.

4. Hydrobuchse nach Anspruch 3,
**dadurch gekennzeichnet, dass**
es sich bei der viskosen Flüssigkeit der Viskodichtungen (6) und bei dem Dämpfungsmittel um Ethylenglykol handelt.

5. Hydrobuchse nach Anspruch 1 oder 2,
**dadurch gekennzeichnet, dass**
die Viskodichtungen (6) als auf dem Umfang des Lagerkörpers (2) vollständig umlaufende Kanalrillen ausgebildet sind.

6. Hydrobuchse nach einem der Ansprüche 1, 2 oder 5,
**dadurch gekennzeichnet, dass**
an jedem der axialen Lagerenden zumindest eine entsprechend ausgebildete Viskodichtung (6) angeordnet ist.

## Claims

1. Hydraulic bush with axial seal, comprising a substantially cylindrical inner part (1), an elastomer bearing body (2) surrounding the inner part (1) and connected thereto by vulcanization, and an outer sleeve (3) that receives the inner part (1) with the bearing body (2), wherein disposed in the bearing body (2) are at least two damping medium chambers (4, 4') that are filled with a viscous damping medium and connected to one another by a flow- or throttle channel and are sealed to prevent an escape of the damping medium by means of axial sealing lips (5), wherein in the region of the sealing lips (5) one or more spaces (6), which extend at least in sections around the circumference of the bearing body (2) and are disposed separately from the damping medium chambers (4, 4') and the channel connecting them, are formed and filled with a viscous liquid, wherein the spaces (6) disposed in the region of the sealing lips (5) are not flow-connected to the damping medium chambers (4, 4') and are filled with a viscous liquid, the pressure of which substantially corresponds to or is higher than the ambient pressure but at any rate is high than the pressure in the damping medium chambers (4, 4'),
**characterized in that** the liquid situated in the spaces (6) has a viscosity different from the viscosity of the damping medium or a comparably high viscosity.

2. Hydraulic bush according to claim 1,
**characterized in that**
the viscoseals, which are formed by the spaces (6) filled with the viscous liquid, are under a pressure that is higher than the ambient pressure.

3. Hydraulic bush according to claim 1 or 2,
**characterized in that**
the viscous liquid in the viscoseals (6) is the liquid also used as a damping medium.

4. Hydraulic bush according to claim 3,
**characterized in that**
the viscous liquid of the viscoseals (6) and the damping medium is ethylene glycol.

5. Hydraulic bush according to claim 1 or 2,
**characterized in that**
the viscoseals (6) take the form of channel grooves extending around the entire circumference of the bearing body (2).

6. Hydraulic bush according to one of claims 1, 2 or 5,
**characterized in that**
at each of the axial bearing ends at least one correspondingly designed viscoseal (6) is disposed.

## Revendications

1. Manchon d'amortissement hydraulique à étanchéité axiale, qui est constitué d'une partie intérieure (1) sensiblement cylindrique, d'un corps de palier (2) élastomère entourant la partie intérieure (1) et assemblé à celle-ci par vulcanisation et d'une douille extérieure (3) recevant la partie intérieure (1) avec le corps de palier (2),au moins deux chambres à fluide d'amortissement (4, 4') remplies d'un fluide d'amortissement visqueux et reliées l'une à l'autre par un canal d'écoulement ou d'étranglement étant disposées dans le corps de palier (2), lesquelles sont rendues étanches contre une fuite du fluide d'amortissement par des lèvres d'étanchéité (5) axiales, un ou plusieurs volumes (6) entourant au moins par endroits le pourtour du corps de palier (2) étant réalisés dans la zone des lèvres d'étanchéité (5) et disposés séparément des chambres de fluide d'amortissement (4, 4') et du canal les reliant, et ceux-ci étant remplis d'un liquide visqueux, les volumes (6) disposés dans la zone des lèvres d'étanchéité (5) n'étant pas reliés de manière à conduire le courant aux chambres de fluide d'amortissement (4, 4') et étant remplis d'un liquide visqueux dont la pression correspond sensiblement à la pression ambiante ou est supérieure à celle-ci, mais est en tout cas supérieure à la pression régnant dans les chambres de fluide d'amortissement (4, 4'),
**caractérisé en ce que** le liquide se trouvant dans les volumes (6) présente une viscosité différente de celle du fluide d'amortissement ou une viscosité élevée comparable.

2. Manchon d'amortissement hydraulique selon la revendication 1,
**caractérisé en ce que**
les joints d'étanchéité visqueux qui sont réalisés par les volumes (6) remplis du liquide visqueux, sont sous surpression par rapport à la pression ambiante.

3. Manchon d'amortissement hydraulique selon l'une quelconque des revendications 1 ou 2,
**caractérisé en ce que**
le fluide visqueux dans les joints d'étanchéité visqueux (6) est le liquide utilisé aussi comme fluide d'amortissement.

4. Manchon d'amortissement hydraulique selon la revendication 3,
**caractérisé en ce que**
le liquide visqueux des joints d'étanchéité visqueux (6) et le fluide d'amortissement sont de l'éthylèneglycol.

5. Manchon d'amortissement hydraulique selon l'une quelconque des revendications 1 ou 2,
**caractérisé en ce que**
les joints d'étanchéité visqueux (6) sont réalisés sous la forme de gorges de canal entourant totalement le pourtour du corps de palier (2).

6. Manchon d'amortissement hydraulique selon l'une quelconque des revendications 1, 2 ou 5,
**caractérisé en ce que**
sur chacune des extrémités axiales de palier est disposé au moins un joint d'étanchéité visqueux (6) réalisé de cette façon.
